# EUROPÄISCHE PATENTANMELDUNG

(11) **EP 4 027 042 A1**
(43) Veröffentlichungstag der Anmeldung: **13.07.2022**
(21) Anmeldenummer: 21213735.0
(22) Anmeldetag: 10.12.2021
(51) Int. Cl.: F16K 1/24, F16K 11/076, F01P 7/14

(54) **KFZ-WEGEVENTIL ZUM EINSTELLEN EINER FLUIDSTRÖMUNG**

(30) Priorität: 05.01.2021 DE 102021100068
(71) Anmelder: WOCO Industrietechnik GmbH, 63628 Bad Soden-Salmünster (DE)
(72) Erfinder: Ludwig, Uwe, 63628 Bad Soden-Salmünster (DE)
(74) Vertreter: Schmid, Nils T.F.

(57) **Zusammenfassung**

Die vorliegende Erfindung betrifft ein Wegeventil (1) zum Einstellen einer Fluidströmung, wie einer Kühlmittelströmung, zwischen wenigstens zwei Schaltzuständen, umfassend ein Ventilgehäuse (3), ein stellbares Ventilglied (5) und eine Kulissenführung (39), die dazu eingerichtet ist, das Ventilglied in einen Dichtkontakt-Schaltzustand mit dem Ventilgehäuse zu drängen und in einen bezüglich des Dichtkontakt-Schaltzustands zurückversetzten Freigabe-Schaltzustand zu führen.

## Beschreibung

Die vorliegende Erfindung betrifft ein Wegeventil, insbesondere ein Mehrwegeventil, wie ein 3/2- oder 4/2-Wegeventil, zum Einstellen einer Fluidströmung, wie einer Kühlmittelströmung, beispielsweise eines Kraftfahrzeugs. Des Weiteren betrifft die vorliegende Erfindung ein KFZ-Fluidströmungsleitsystem, wie ein KFZ-Thermomanagementsystem, mit einem derartigen Stellventil.

Gattungsgemäße Mehrwegeventile werden beispielsweise im Kraftfahrzeug zu dessen Thermomanagement eingesetzt und dienen insbesondere dazu, Kühlmittel, wie Wasser oder Öle, zu leiten. Bei den bekannten Mehrwegeventilen mit Drehkolben als Ventilglied bestehen Dichtungsprobleme und hohe Reibungskräfte zwischen Ventilglied und Ventilgehäuse, insbesondere Ventilsitz. Daher müssen relativ leistungsstarke Aktuatoren zum Betätigen der Ventilglieder eingesetzt werden.

DE102013105321A1 offenbart ein Mehrwegeumschaltventil zum Einstellen einer Fluidströmung. Das Mehrwegeumschaltventil weist einen translatorisch in einem Ventilgehäuse stellbaren Schieberkolben auf, der eine wellige Außenkontur besitzt. Das Ventilgehäuse weist Ausnehmungen auf, in denen Dichtelemente quer zur Schieberachse beweglich angeordnet sind. Die Dichtelemente kooperieren mit den Bergabschnitten der welligen Schieberaußenkontur und sind ansonsten kontaktfrei bezüglich der Schieberaußenkontur.

An dem Mehrwegeumschaltventil gemäß hat sich vor allem dessen konstruktiv aufwändige Bauart, insbesondere zur Realisierung des Schieberkolbens, als nachteilig erwiesen. Darüber hinaus gestaltet sich die Montage aufgrund der hohen Teileanzahl als kompliziert.

Es ist Aufgabe der vorliegenden Erfindung, die Nachteile des Standes der Technik zu überwinden, insbesondere ein Wegeventil für eine Kraftfahrzeugfluidströmung dahingehend zu verbessern, dass die Reibungskraft zwischen Ventilglied und Ventilgehäuse verringert ist und/oder geringere Leistungsanforderungen an den Stellantrieb zum Stellen des Wegeventils gestellt sind, insbesondere ohne die Dichtigkeit des Wegeventils zu beeinträchtigen.

Diese Aufgabe wird durch die Merkmale der unabhängigen Ansprüche gelöst.

Danach ist ein Wegeventil zum Einstellen einer Fluidströmung, wie einer Kühlmittelströmung, zwischen wenigstens zwei Schaltzuständen bereitgestellt. Bei dem Wegeventil kann es sich beispielsweise um ein Mehrwegeventil, wie ein 3/2- oder ein 4/2-Wegeventil, handeln. Das erfindungsgemäße Wegeventil wird beispielsweise im Kraftfahrzeug zu dessen Thermomanagement eingesetzt. Bei dem Wegeventil kann es sich demnach um ein KFZ-Wegeventil, insbesondere ein KFZ-Thermomanagementventil, wie ein KFZ-Kühlmittelregelventil, handeln, welches beispielsweise in einem KFZ-Fluidströmungsleitsystem, wie einem KFZ-Thermomanagementleitsystem, insbesondere einem KFZ-Kühlkreislauf, eingesetzt wird. Bei der Fluidströmung kann es sich beispielsweise um Kühlmittel, Wasser, Öl oder dergleichen, handeln.

Das erfindungsgemäße Wegeventil umfasst ein Ventilgehäuse. Das Ventilgehäuse kann einen Ventilraum begrenzen, durch den die Fluidströmung hindurchgeführt werden kann und/oder in dem ein Ventilglied zum Einstellen der verschiedenen Schaltzustände bewegbar gelagert sein kann. Das Ventilgehäuse kann wenigstens zwei, insbesondere drei oder vier, Fluidanschlüsse, wie Öffnungen oder Durchgänge, insbesondere wenigstens einen Fluideingang und wenigstens einen Fluidausgang, aufweisen.

Des Weiteren umfasst das Wegeventil ein stellbares Ventilglied. Beispielsweise kann das Ventilglied an einen Stellantrieb insbesondere kraftübertragungsgemäß gekoppelt sein, welcher zum Betätigen beziehungsweise Stellen des Ventilglieds ausgelegt ist. Bei dem Ventilglied kann es sich beispielsweise um einen bezüglich einer Rotationsstellachse rotierbar gelagerten Drehkolben handeln. Des Weiteren ist es möglich, dass das Ventilglied ein bezüglich einer Stellachse translatorisch gelagerter Schieber ist.

Gemäß einem Aspekt der vorliegenden Erfindung umfasst das Wegeventil ferner eine Kulissenführung, die dazu eingerichtet ist, das Ventilglied in einen Dichtkontakt-Schaltzustand mit dem Ventilgehäuse zu drängen und in einen bezüglich des Dichtkontakt-Schaltzustands zurückversetzten Freigabe-Schaltzustand zu führen. Beim Einnehmen des Dichtkontakt-Schaltzustands drängt die Kulissenführung das Ventilglied gegen das Ventilgehäuse, sodass eine zwischen Ventilglied und Ventilgehäuse bestehende Haftreibung insbesondere kontinuierlich erhöht wird. Beispielsweise ist der Dichtkontakt-Schaltzustand einem der Fluidanschlüsse im Ventilgehäuse zugeordnet. Beim Verlassen des Dichtkontakt-Schaltzustands führt die Kulissenführung das Ventilglied weg von dem Ventilgehäuse, sodass die zwischen Ventilgehäuse und Ventilglied bestehende Haftreibung sich wieder insbesondere kontinuierlich abbaut.

Ein Vorteil der vorliegenden Erfindung besteht darin, dass auf konstruktiv einfach zu realisierende und herzustellende Weise eine besonders reibungsarme Bewegung des Ventilglieds innerhalb des Ventilgehäuses ermöglicht ist. Insofern zeichnet sich das erfindungsgemäße Wegeventil durch einen geringen Verschleiß und eine Langlebigkeit aus. Aufgrund der geringen Reibungskraft beim Stellen des Ventilglieds kann auf kostengünstigere und/oder leistungsärmere Stellantriebe zum Betätigen des Stellglieds zurückgegriffen werden. Sofern der Dichtkontakt-Schaltzustand einem zu verschließenden Fluidanschluss zugeordnet ist, erfüllt die erfindungsgemäße Kulissenführung zwei vorteilhafte Funktionen: zum einen wird während des Verstellens des Ventilglieds einen reibungsarme, geführte Bewegung des Ventilglieds ermöglicht und zum anderen wird zum Verschließen des entsprechenden Fluidanschlusses eine gesteigerte Reibungskraft über die Kulissenführung zum fluiddichten Verschließen des entsprechenden Fluidanschlusses aufgebaut. Da nur im Verschlussbereich, also im Dichtkontakt-Schaltzustand, ein Anpressdruck zwischen Ventilglied und Ventilgehäuse entsteht, verläuft die Stellbewegung des Ventilglieds im Wesentlichen reibungsfrei, sodass auch auf zusätzliche Gleit- und/oder Dichtmaßnahmen verzichten werden kann. Durch die geführte Bewegung beim Stellen des Ventilglieds mittels der Kulissenführung wird quasi automatisch zum Aufbau des Anpressdrucks insbesondere im Verschlussbereich zum Verschließen eines Fluidanschlusses das Ventilglied in den Dichtkontakt-Schaltzustand mit dem Ventilgehäuse gedrängt und ebenso quasi automatisch aus dem Dichtkontakt-Schaltzustand heraus zurückgeführt.

Sofern es sich um einen bezüglich einer Rotationsachse drehbar gelagerten Drehkolben handelt, kann unter "drängen" verstanden werden, dass die Kulissenführung das Ventilglied aus der rein rotatorischen Translationsbewegung heraus nach radial außen drängt, um in den Dichtkontakt-Schaltzustand mit dem Ventilgehäuse zu gelangen, also um einen radialen Abstand zwischen Ventilglied und Ventilgehäuse zu überwinden. Unter dem "zurückversetzten Freigabezustand" kann verstanden werden, dass die Kulissenführung das Ventilglied wieder insbesondere nach radial innen in die im Wesentlichen rein rotatorische Rotationsstellbewegung zurückführt. Bezüglich der Schieber-Ventilgliedausführung kann die Kulissenführung das Ventilglied quer, insbesondere senkrecht, zur translatorischen Stellbewegung abdrängen, um es mit dem Ventilgehäuse in den Dichtkontakt-Schaltzustand zu drängen. Beim Zurückversetzen aus dem Dichtkontakt-Schaltzustand heraus kann die Kulissenführung das Schieber-Ventilglied wieder zurück auf die translatorische Stellbewegungsrichtung bzw. -bahn führen.

In einer beispielhaften Ausführung der vorliegenden Erfindung weist die Kulissenführung einen in dem Ventilgehäuse, insbesondere einem Ventilgehäuseboden, ausgebildeten Kulissenpfad auf, in dem das Ventilglied geführt ist. Beispielsweise ist der Kulissenpfad aus einem Stück mit dem Ventilgehäuse hergestellt. Beim Stellen des Ventilglieds fährt diese den Kulissenpfad ab beziehungsweise entlang des Kulissenpfads insbesondere zwischen den wenigstens zwei Schaltzuständen und wird während der Stellbewegung in vorbestimmten Dreh- oder Axialpositionen, je nach Ventilgliedausführung, in einen Dichtkontakt-Schaltzustand gedrängt und wieder aus diesem heraus geführt. Dadurch, dass der Kulissenpfad am Ventilgliedgehäuse angeordnet beziehungsweise sogar einstückig mit diesem ausgebildet sein kann, ist eine besonders konstruktiv einfache Ausführung der Kulissenführung bereitgestellt.

Gemäß einer beispielhaften Weiterbildung des erfindungsgemäßen Wegeventils verläuft der Kulissenpfad derart, dass beim Einnehmen des Dichtkontakt-Schaltzustands das Ventilglied quer zu seiner Stellachse in Richtung einer Dichtkontaktfläche, die beispielsweise durch einen Ventilsitz festgelegt und/oder gebildet sein kann, des Ventilgehäuses umgelenkt wird. Bei einem Drehkolben-Ventilglied kann das Ventilglied radial zur Rotationsstellachse umgelenkt werden. Bei einem Schieber-Ventilglied kann das Schieber-Ventilglied quer zur Translationsstellachse umgelenkt werden. Die Dichtkontaktfläche des Ventilgehäuses kann beispielsweise von einem Ventilsitz gebildet sein. Beispielsweise ist der Ventilsitz einem Fluidanschluss zugeordnet.

Gemäß einer weiteren beispielhaften Weiterbildung des erfindungsgemäßen Wegeventils weist die Kulissenführung eine Andrücknase auf, die sich in den Kulissenpfad hinein erstreckt, sodass beim Überfahren der Andrücknase, beispielsweise beim Vorbeifahren des Ventilglieds an der Andrücknase, durch das Ventilglied dieses von der Andrücknase in den Dichtkontakt-Schaltzustand gedrängt wird. Die Andrücknase kann demnach eine Ausweich-Bewegung des Ventilglieds bewirken, wobei eine Abmessung der Andrücknase und damit ein Bewegungsausgleich des Ventilglieds auf einen zu überbrückenden Abstand zwischen Ventilglied und Ventilgehäuse abgestimmt ist, welcher zum Einnehmen des Dichtkontakt-Schaltzustands überwunden werden muss. Beispielsweise kann die Kulissenführung zwei, drei oder vier in einem Abstand zueinander angeordnete Andrücknasen umfassen. Dabei kann je eine Andrücknase je einem Fluidanschluss zugewiesen sein. Somit kann gewährleistet sein, dass die Kulissenführung des Ventilglieds jeweils im Bereich eines Fluidanschlusses in Richtung des Ventilglieds zum Ausbilden eines Dichtkontakt-Schaltzustands drängt, um den entsprechenden Fluidanschluss fluiddicht zu verschließen. Der Dichtkontakt-Anpressdruck zwischen Ventilglied und Ventilgehäuse wird folglich nur in den entsprechenden Verschlussbereichen bei den Fluidanschlüssen aufgebaut, also nur dann, wenn dieser auch notwendig ist. Beim restlichen Stellbewegungsbereich, insbesondere Rotations- oder Translationsbewegungsbereich, des Ventilglieds kann dieses im Wesentlichen reibungsfrei verlaufen.

Gemäß einer weiteren beispielhaften Ausführung des erfindungsgemäßen Wegeventils ist der Kulissenpfad durch eine in das Ventilgehäuse eingebrachte, insbesondere im Ventilgehäuseboden, Führungsnut gebildet. Des Weiteren weist das Ventilglied einen als Kulissenstein fungierenden, mit der Führungsnut zusammenwirkenden Führungsvorsprung auf. Beim Stellen des Ventilglieds wird der Führungsvorsprung des Ventilglieds in der Führungsnut des Ventilgehäuses geführt. Mit anderen Worten ragt der Führungsvorsprung in die Führungsnut beziehungsweise greift in diese ein. Ein Querschnitt des Führungsvorsprungs kann an einen Innenquerschnitt der Führungsnutform angepasst sein.

In einer beispielhaften Weiterbildung des erfindungsgemäßen Wegeventils ist die Führungsnut in Bezug auf die Rotationsstellachse des als Drehkolben ausgebildeten Ventilglieds im Wesentlichen ringförmig ausgebildet und weit eine, insbesondere zwei, drei oder vier in Umfangsrichtung insbesondere gleichmäßig verteilte, Weiche auf, die das Ventilglied zum Einnehmen des Dichtkontakt-Schaltzustands aus dem ringförmigen, regulären Kulissenpfad umlenkt beziehungsweise abdrängt. Im Falle eines translatorisch stellbaren Schieber-Ventilglieds kann die Führungsnut im Wesentlichen parallel zur Translationsstellachse ausgerichtet sein und eine, insbesondere zwei, drei oder vier in Translationsstellrichtung, insbesondere gleichmäßig verteilte, Weiche aufweisen, die das Schieber-Ventilglied quer zur Translations-Stellachse umlenkt beziehungsweise abdrängt. Die wenigstens eine weiche kann ferner derart geformt sein und/oder gewährleisten, dass das Ventilglied zurück auf den regulären ringförmigen oder regulären geradlinigen Stellpfad zurückgeführt wird.

Gemäß einem weiteren Aspekt der vorliegenden Erfindung, der mit den vorhergehenden Aspekten und beispielhaften Ausführungen kombinierbar ist, ist ein Wegeventil zum Einstellen einer Fluidströmung zwischen wenigstens zwei Schaltzuständen bereitgestellt. Bei dem Wegeventil kann es sich beispielsweise um ein Mehrwegeventil, wie ein 3/2- oder ein 4/2-Wegeventil, handeln. Das erfindungsgemäße Wegeventil wird beispielsweise im Kraftfahrzeug zu dessen Thermomanagement eingesetzt. Bei dem Wegeventil kann es sich demnach um ein KFZ-Wegeventil, insbesondere ein KFZ-Thermomanagementventil, wie ein KFZ-Kühlmittelregelventil, handeln, welches beispielsweise in einem KFZ-Fluidströmungsleitsystem, wie einem KFZ-Thermomanagementleitsystem, insbesondere einem KFZ-Kühlkreislauf, eingesetzt wird. Bei der Fluidströmung kann es sich beispielsweise um Kühlmittel, Wasser, Öl oder dergleichen, handeln.

Das Wegeventil umfasst ein Ventilgehäuse. Das Ventilgehäuse kann einen Ventilraum begrenzen, durch den die Fluidströmung hindurchgeführt werden kann und/oder in dem ein Ventilglied zum Einstellen der verschiedenen Schaltzustände bewegbar gelagert sein kann. Das Ventilgehäuse kann wenigstens zwei, insbesondere drei oder vier, Fluidanschlüsse, wie Öffnungen oder Durchgänge, insbesondere wenigstens einen Fluideingang und wenigstens einen Fluidausgang, aufweisen.

Das Wegeventil umfasst ferner ein Ventilglied. Das Ventilglied ist insbesondere zum Einstellen der wenigstens zwei Schaltzustände stellbar. Es kann sich dabei um ein bezüglich einer Rotationsstellachse rotierbar gelagerten Drehkolben handeln oder um einen entlang einer Translationsstellachse stellbaren Schieber. Das Ventilglied weist einen mit einem Stellantrieb zum Betätigen des Ventilglieds insbesondere kraftübertragungsgemäß zu verbindendes Stellteil und ein Dichtteil zum Einnehmen eines Dichtkontakts mit dem Ventilgehäuse auf. Das Stellteil und das Dichtteil können separate, insbesondere separat hergestellte, Komponenten sein.

Gemäß dem weiteren erfindungsgemäßen Aspekt ist das Dichtteil mittels einer Schienenführung beweglich relativ zu dem Stellteil gelagert. Das Stellteil kann diejenige Komponente sein, die unmittelbar durch den Stellantrieb betätigt wird, während das Dichtteil ohne separaten Antrieb an dem Stellteil gelagert ist. Eine relative Bewegungsmöglichkeit des Dichtteils relativ zu dem Stellteil ist über die Schienenführung ermöglicht, die beispielsweise beim Stellen des Ventilglieds, also beim Bewegen des Ventilglieds zwischen den verschiedenen Schaltzuständen, zwischen einem Dichtkontakt-Schaltzustand bewegt werden kann, bei dem das Dichtteil derart über die Schienenführung relativ zu dem Stellteil positioniert ist, dass ein insbesondere erhöhter Reibkontakt zwischen Ventilglied und Ventilgehäuse, insbesondere Ventilsitz, beispielsweise im Bereich eines Fluidanschlusses, entsteht. Die Schienenführung ermöglicht auf kostengünstig und einfach zu realisierende Weise eine Entkopplung von Stellteil und Dichtteil, sodass über die Schienenführung flexibel die Relativbewegungsmöglichkeit des Stellteils bezüglich des Dichtteils einstellbar ist, um einen gewünschten Dicht-Anpressdruck an einer bestimmten Position, insbesondere in einer bestimmten Rotationstellung des Ventilglieds oder bei einer bestimmten axialen Stellposition, aufzubauen. Somit kann auf konstruktiv einfach zu realisierende und herzustellende Weise ein besonders reibungsarmes Einnehmen des Dichtkontakts innerhalb des Ventilgehäuses ermöglicht sein. Insofern zeichnet sich das erfindungsgemäße Wegeventil durch einen geringen Verschleiß und eine höhere Langlebigkeit aus. Aufgrund der geringen Reibungskraft beim Einnehmen des Dichtkontakts kann auf kostengünstigere und/oder leistungsärmere Stellantriebe zum Betätigen des Stellglieds zurückgegriffen werden.

In einer beispielhaften Ausführung des erfindungsgemäßen Wegeventils ist die Schienenführung durch eine formkorrespondierende Vorsprung-Vertiefung-Struktur an Stellteil und Dichtteil realisiert. Die Vorsprung-Vertiefung-Struktur kann Eingriffselemente an Stellteil und Dichtteil aufweisen, die einander derart zugeordnet und/oder aufeinander derart formabgestimmt sind, dass sie ineinander eingreifen können, um die Relativbeweglichkeit des Dichtteils bezüglich des Stellteils zu etablieren.

In einer weiteren beispielhaften Ausführung der vorliegenden Erfindung kann das Ventilglied einen Dichtkontakt-Schaltzustand, in dem sich das Dichtteil im Dichtkontakt mit dem Ventilgehäuse befindet, und einen bezüglich des Dichtkontakt-Schaltzustands zurückversetzten Freigabe-Schaltzustand einnehmen, in dem das Dichtteil von dem Ventilgehäuse wegbewegt ist. Beispielsweise ist das Dichtteil zum Einnehmen des Dichtkontakt-Schaltzustands in Richtung des Ventilgehäuses gedrängt. Die Schienenführung kann beispielsweise eine Art Getriebe bilden. Beim Einnehmen des Dichtkontakt-Schaltzustands kann demnach das Dichtteil beispielsweise nach radial außen bezüglich der Rotationsstellachse oder quer zur Translationsstellachse gedrängt werden, sodass ein zwischen Dichtteil und Ventilgehäuse bestehender Abstand überbrückt werden kann, sodass das Dichtteil in einen Anpress-Dichtkontakt mit dem Ventilgehäuse geraten kann. Beim sich Entfernen aus dem Dichtkontakt-Schaltzustand in den zurückversetzten Freigabe-Schaltzustand kann das Dichtteil über die Schienenführung wieder weg von dem Ventilgehäuse bewegt werden, sodass ein diesbezüglicher Abstand hergestellt und eine Reibung zwischen Dichtteil und Ventilgehäuse verringert, insbesondere unterbunden, wird.

Gemäß einer beispielhaften Weiterbildung des erfindungsgemäßen Wegeventils ist das Dichtteil derart beweglich an dem Stellteil gelagert, dass das Dichtteil beim Verlassen des Dichtkontakts vorzugsweise ausschließlich unter dem Einfluss des Fluiddrucks von dem Ventilgehäuse wegbewegt wird. Des Weiteren ist es möglich, dass das Dichtteil beim Verlassen des Dichtkontakts über eine Führungseinrichtung von dem Ventilgehäuse wegbewegt wird. Sobald das Dichtteil aus dem Dichtkontakt wegbewegt wird, um einen Schaltzustand des Wegeventils einzustellen, bei dem eine Fluidströmung durch das Wegeventil hindurch, insbesondere durch eine dem entsprechenden Dichtkontakt zugeordnete Fluidöffnung hindurch, zugelassen ist, baut sich ein Fluiddruck an dem Dichtteil auf, welches in Folge dessen durch diesen verlagert wird. Die Ausnutzung des Fluiddrucks hat unter anderem den Vorteil, dass der ohnehin vorhandene Fluiddruck genutzt werden kann, um den Freigabe-Schaltzustand einzustellen, insbesondere ohne dass weitere Komponenten, wie eine Federvorspannung, ein eigenes Getriebe oder ein eigenes Bewegungsmittel für das Dichtteil, notwendig ist.

In einer weiteren beispielhaften Ausführung des erfindungsgemäßen Wegeventils ist die Bewegungsachse bzw. -richtung des Dichtteils im Wesentlichen senkrecht zur Stellachse, insbesondere zur Rotationsstellachse oder zur Translationsstellachse, des Ventilglieds orientiert. Die Schienenführung kann dabei als Art Getriebe zum Umsetzen der verschiedenen Bewegungsrichtungen zwischen Stellteil und Dichtteil dienen.

In einer weiteren beispielhaften Ausführung des erfindungsgemäßen Wegeventils weist die Vorsprung-Vertiefung-Struktur eine dichtteil- oder stellteilseitige geradlinige Führungsschiene und einen dazu formkomplementären stellteil- oder dichtteilseitigen Führungswagen auf. Die Führungsschiene und/oder der Führungswagen können/kann jeweils aus einem Stück mit dem Dichtteil beziehungsweise dem Stellteil hergestellt sein. Die formkomplementäre Schiene-Wagen-Struktur ist zum einen auf einfache Weise herstellbar und zum anderen bietet sie eine gezielte Montage von Dichtteil und Stellteil und stellt ferner eine unmittelbare Führung bei der Relativbewegung von Stellteil bezüglich Dichtteil bereit.

Gemäß einer weiteren beispielhaften Ausführung des erfindungsgemäßen Wegeventils weist die Führungsschiene einen asymmetrischen, insbesondere im Wesentlichen kreuzförmigen, Querschnitt auf. Durch die Asymmetrie ist eine Fehlmontage vermieden. Beispielsweise kann das Stellteil eine kreuzförmige, sich quer zur Rotationsstellachse beziehungsweise Translationsstellachse orientierte Führungsschiene aufweisen, auf welche der stellteilseitige Führungswagen, welcher beispielsweise als formkomplementäre, kreuzförmige Vertiefung ausgebildet ist, mittels welcher das Stellteil auf die Führungsschiene aufgeschoben beziehungsweise aufgesetzt wird.

Gemäß einer weiteren beispielhaften Ausführung des erfindungsgemäßen Wegeventils sind die Kulissenführung und die Schienenführung miteinander gekoppelt, insbesondere aufeinander abgestimmt. Kulissenführung und Schienenführung können so aufeinander abgestimmt sein, dass zum Einnehmen des Dichtkontakt-Schaltzustands sowie beim Einnehmen des bezüglich des Dichtkontakt-Schaltzustands zurückversetzten Freigabe-Schaltzustands die Schienenführung auf die Kulissenführung reagiert. Das Wegeventil kann derart ausgebildet sein bzw. die Kulissenführung und die Schienenführung können so aufeinander abgestimmt und/oder gekoppelt sein, dass die Kulissenführung die Schienenführung aktiviert.

Gemäß einer beispielhaften Weiterbildung des erfindungsgemäßen Wegeventils ist die Kulissenführung dazu eingerichtet, zum Einnehmen des Dichtkontakt-Schaltzustands die Schienenführung zu aktivieren. Dies kann dadurch realisiert sein, dass die Kulissenführung veranlasst, dass das Dichtteil relativ zu dem Stellteil verlagert wird und in einen Dichtkontakt mit dem Ventilgehäuse gedrängt wird. Das Einnehmen des Dichtkontakt-Schaltzustands kann beispielsweise derart erfolgen, dass das Dichtteil relativ zu dem Stellteil verlagert und in Richtung des Ventilglieds zum Aufbau eines Dichtkontakt-Anpressdrucks gedrängt wird sowie in entgegengesetzter Richtung zum Verlassen des Dichtkontakt-Schaltzustands und Einnehmen des Freigabe-Schaltzustands.

Gemäß einer weiteren beispielhaften Weiterbildung des erfindungsgemäßen Wegeventils führt das Dichtteil beim Stellen des Ventilglieds eine Exzenterbewegung entlang des Kulissenpfads aus. Beispielsweise führt das Dichtteil derart eine Exzenterbewegung aus, dass das Dichtteil insbesondere von einer Weiche oder einer Andrücknase in den Dichtkontakt-Schaltzustand gedrängt und vorzugsweise ausschließlich unter dem Einfluss des Fluiddrucks aus dem Dichtkontakt zurückversetzt wird. Beispielsweise weist das Dichtteil den zuvor beschriebenen, als Kulissenstein fungierenden und mit der Führungsnut in dem Ventilgehäuse zusammenwirkenden Führungsvorsprung auf. Je nach Rotationsstellung des Drehkolben-Ventilglieds beziehungsweise je nach axialer Position entlang der Translationsstellachse und in Abhängigkeit davon, ob der Führungsvorsprung des Dichtteils sich im Bereich einer Weiche oder einer Andrücknase befindet oder nicht, wird das Dichtteil in einen Dichtkontakt-Anpresszustand mit dem Ventilgehäuse gedrängt oder davon zurückversetzt. Die Schienenführung und die Kulissenführung können so aufeinander abgestimmt sein, dass das Dichtteil jeweils im Bereich der Fluidöffnungen, die es zu verschließen gilt, um beispielsweise eine Fluidströmung abzusperren oder zu verringern, in einen Dichtkontakt mit dem Ventilgehäuse gebracht wird.

Gemäß einem weiteren Aspekt der vorliegenden Erfindung, der mit den vorhergehenden Aspekten und beispielhaften Ausführungen kombinierbar ist, ist ein KFZ-Wegeventil, insbesondere ein KFZ-Thermomanagementventil, wie ein KFZ-Kühlmittelregelventil, bereitgestellt, dass beispielsweise gemäß einem der zuvor beschriebenen Aspekte oder beispielhaften Ausführungen ausgebildet sein kann, zum Einstellen einer Fluidströmung, wie einer Kühlmittelströmung, bereitgestellt.

Das KFZ-Wegeventil umfasst ein Ventilgehäuse mit wenigstens zwei Fluidöffnungen. Das Ventilgehäuse kann einen Ventilraum begrenzen, durch den die Fluidströmung hindurchgeführt werden kann und/oder in dem ein Ventilglied zum Einstellen der verschiedenen Schaltzustände bewegbar gelagert sein kann. Das Ventilgehäuse kann wenigstens zwei, insbesondere drei oder vier, Fluidanschlüsse, wie Öffnungen oder Durchgänge, insbesondere wenigstens einen Fluideingang und wenigstens einen Fluidausgang, aufweisen. Beispielsweise handelt es sich bei dem KFZ-Wegeventil um ein Mehrwegeventil, insbesondere ein KFZ-3/2- oder KFZ-4/2-Wegeventil.

Ferner umfasst das KFZ-Wegeventil ein Ventilglied, das zwischen einem Schließzustand, in dem das Ventilglied in einen Dichtkontakt mit dem Ventilgehäuse gedrängt ist, um eine der Fluidöffnungen fluiddicht zu verschließen, und einem Öffnungszustand, in dem das Ventilglied von dem Ventilgehäuse weg zurückversetzt ist, um die Fluidöffnung wenigstens teilweise zu öffnen, stellbar ist.

In einer beispielhaften Ausführung, die auf alle der zuvor beschriebenen Aspekte beziehungsweise beispielhaften Ausführungen erfindungsgemäßer Wegeventile beziehungsweise KFZ-Wegeventile anwendbar ist, ist das Ventilglied frei von einem Fluiddurchgang ausgestaltet. Das Ventilglied kann mit anderen Worten derart ausgeführt sein, dass beim Zulassen einer Fluidströmung durch das Wegeventil hindurch, also bei einem Öffnungszustand des Wegeventils, die Fluidströmung an dem Ventilglied vorbeiströmt. Beispielsweise weist das Ventilglied eine wenigstens abschnittsweise rotationsförmige Außenkontur auf, sodass sich ein möglichst geringer Staudruck ausbildet und/oder die Fluidströmung möglichst reibungsfrei an dem Ventilglied vorbei strömen kann.

Gemäß einem weiteren Aspekt der vorliegenden Erfindung, der mit den vorhergehenden Aspekten und beispielhaften Ausführungen kombinierbar ist, ist ein KFZ-Fluidströmungsleitsystem, insbesondere ein KFZ-Thermomanagement-Fluidleitsystem, wie ein KFZ-Kühlkreislauf, bereitgestellt. Das KFZ-Fluidströmungsleitsystem umfasst ein erfindungsgemäßes beispielsweise gemäß einem der zuvor beschriebenen Aspekte beziehungsweise beispielhaften Ausführungen ausgebildetes Wegeventil. Ferner kann das Fluidströmungsleitsystem an eine Fluidquelle, wie beispielsweise ein Kühlmittelreservoir, und/oder eine zu kühlende Kraftfahrzeugkomponente, wie eine Motorkomponente oder eine KFZ-Batterie, angeschlossen sein.

Bevorzugte Ausführungen sind in den Unteransprüchen gegeben.

Im Folgenden werden weitere Eigenschaften, Merkmale und Vorteile der Erfindung mittels Beschreibung bevorzugter Ausführungen der Erfindung anhand der beiliegenden beispielhaften Zeichnungen deutlich, in denen zeigen:
- Figur 1: einen Ausschnitt einer perspektivischen Ansicht einer beispielshaften Ausführung eines erfindungsgemäßen Wegeventils;
- Figur 2: eine Draufsicht auf ein Ventilgehäuse des Wegeventils gemäß Figur 1;
- Figur 3: eine perspektivische Ansicht in Explosionsdarstellung eines Ventilglieds einer weiteren beispielshaften Ausführung eines erfindungsgemäßen Wegeventils;
- Figuren 4-6: schematische Darstellungen von verschiedenen Betriebszuständen einer beispielshaften Ausführung eines erfindungsgemäßen Wegeventils;
- Figur 7: einen Ausschnitt einer perspektivischen Ansicht einer beispielshaften weiteren Ausführungsform eines erfindungsgemäßen Wegeventils;
- Figur 8: eine perspektivische Ansicht einer weiteren beispielshaften Ausführung eines Ventilglieds eines Ausführungsbeispiels eines erfindungsgemäßen Wegeventils; und
- Figur 9: einen Ausschnitt einer perspektivischen Darstellung eines Wegeventils, dass das Ventilglied gemäß Figur 8 enthält.

In der folgenden Beschreibung beispielhafter Ausführungen anhand der beiliegenden Figuren, ist ein erfindungsgemäßen Wegeventil, welches insbesondere ein KFZ-Wegeventil zum Einstellen einer Fluidströmung, wie einer Kühlmittelströmung in einem Kraftfahrzeug, insbesondere einem Kraftfahrzeugmotor, ist, ist im Allgemeinen mit der Bezugsziffer 1 versehen.

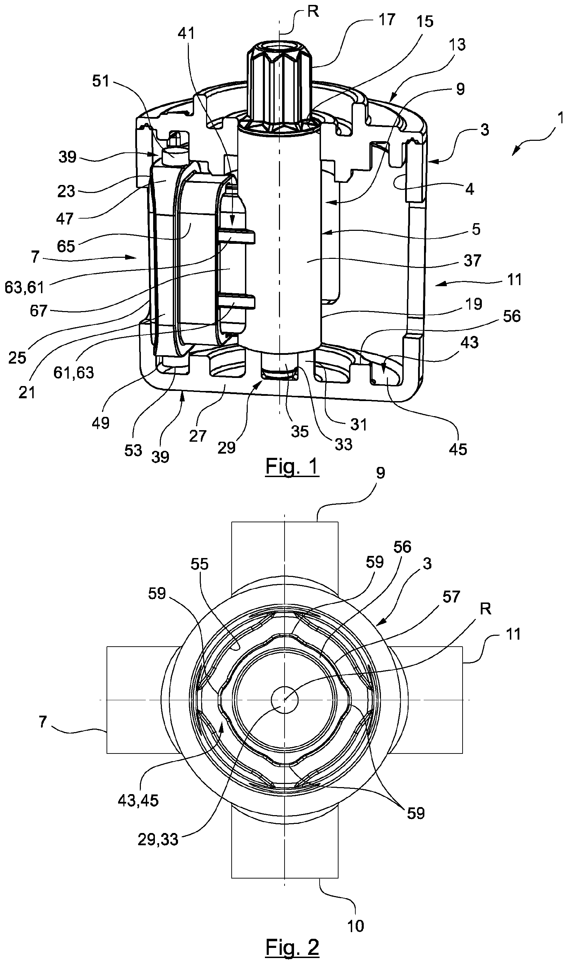

Das Wegeventil 1 gemäß Figur 1 umfasst im Wesentlichen die folgenden Hauptkomponenten: ein Ventilgehäuse, durch das eine Fluidströmung hindurch strömbar ist; und ein stellbares Ventilglied 5, welches gemäß der beispielshaften Ausführung als Drehkolben realisiert ist, welcher zum Einstellen verschiedener Schaltzustände des Wegeventils 1 bezüglich einer Rotationsstellachse R rotierbar ist.

Das Ventilgehäuse 3 umfasst mehrere Fluidanschlüsse oder Fluidöffnungen 7, 9, 11, von denen wenigstens ein Fluideingang und ein Fluidausgang vorliegen. In Figur 1 ist zu erkennen, dass das Ventilgehäuse 3 nach oben hin offen ausgestaltet und mittels eines Ventildeckels 13 insbesondere fluiddicht abgeschlossen ist. Der Fluiddeckel 13 weist eine mittige Durchgangsöffnung 15 auf, durch die hindurch sich das Ventilglied 15 fluiddicht erstreckt und in welcher es drehbar gelagert ist, sodass das Ventilglied 5 kraftübertragungsgemäß an einen nicht dargestellten Stellantrieb gekoppelt werden kann. Der Stellantrieb dient dazu, die notwendige Stellantriebskraft zum Betätigen des Ventilglieds 5 aufzubringen, welche notwendig ist, um die verschiedenen Schaltzustände des Wegeventils 1 einzustellen. An einem von dem Ventildeckel 13 vorstehenden Ende des Ventilglieds 5 kann dieses ein dem Stellantrieb zugeordnetes Kraftübertragungsteil 17 formen.

In der beispielhaften Ausführung gemäß Figur 1 besteht das Ventilglied 5 aus einem kraftübertragungsgemäß mit einem Stellantrieb zu koppelnden Stellteil 19, welches das Kraftübertragungsteil 17 aufweist, und einem relativ zu dem Stellteil 19 bewegbaren Dichtteil 21, das dazu ausgelegt ist, einen Dichtkontakt-Schaltzustand einnehmen zu können, in dem das Dichtteil 21 eine der Fluidöffnungen 7, 9, 11 fluiddicht verschließt, sowie auch einen Freigabe-Schaltzustand einnehmen zu können, in dem das Dichtteil 21 die Fluidöffnungen 7, 9, 11 öffnet, sodass eine Fluidströmung durch die jeweiligen Öffnungen 7, 9, 11 zugelassen ist. Das Dichtteil 21 weist an einer in Bezug auf die Rotationsstellachse R radial nach außen orientierten Stirnseite 23, die als Dichtseite dient, ein Dichtungselement 25, wie eine Ohrringdichtung, auf, um ein verbessertes fluiddichtes Verschließen der Fluidöffnungen 7, 9, 11 zu erreichen. Auf die Relativbeweglichkeit zum Wechseln zwischen Dichtkontakt-Schaltzustand und Freigabe-Schaltzustand, wird weiter unten eingegangen.

Das Ventilgehäuse 3, welches rotationsförmig ist und im Wesentlichen eine Becherform aufweist, besitzt einen geschlossenen Ventilgehäuseboden 27. In dem Ventilgehäuseboden 27 ist eine mittige Drehlagerung 29 für das Ventilglied 5, insbesondere dessen Stellteil 19 vorgesehen. Die Drehlagerung 29 umfasst eine von einer insbesondere umlaufenden Wandung 31 begrenzte Lagervertiefung 33, in welche sich ein Lagerungszapfen 35 des Dichtteils 19 erstreckt. Der Lagerungszapfen 35 ist rotierbar innerhalb der Lagerungsvertiefung 33 aufgenommen. Ferner ist der Lagerungszapfen 35 im Wesentlichen konzentrisch bezüglich einer sich entlang der Rotationsstellachse R ersteckenden Welle 37 des Stellteils 19 orientiert.

Das Einnehmen des Dichtkontakt-Schaltzustands zum fluiddichten Verschließen der Fluidöffnungen 7, 9, 11 sowie auch das Freigeben der einzelnen Fluidöffnungen 7, 9, 11, also das Einnehmen des Freigabe-Schaltzustands, wird über eine Kopplung und Aufeinanderabstimmung einer Kulissenführung 39 und einer Schienenführung 41 erreicht. Die Kulissenführung 39 dient dazu, das Ventilglied 5, insbesondere das Dichtteil 21, in den Dichtkontakt-Schaltzustand mit dem Ventilgehäuse 5 zu drängen und das Ventilglied 5, insbesondere das Dichtteil 21, aus dem Dichtkontakt-Schaltzustand heraus in einen zurückversetzten Freigabe-Schaltzustand zu führen.

Die Schienenführung 41 wirkt dabei als eine Art Getriebe zur Umwandlung einer von der Kulissenführung aufgedrängten Bewegungsänderung in eine Verlagerung des Dichtteils 21. Die Kulissenführung 39 weist einen in dem Ventilgehäuse 3, nämlich dem Ventilgehäuseboden 27, ausgebildeten und aus einem Stück mit dem Ventilgehäuse 5 hergestellten Kulissenpfad 43 auf, in welchem das Ventilglied 5, insbesondere das Dichtteil 21, geführt ist. Der Kulissenpfad 43 ist durch eine in das Ventilgehäuse 3 eingebrachte Führungsnut 45 gebildet, die in Umfangsrichtung in Bezug auf die Rotationsstellachse R orientiert ist. Die Führungsnut 45 bildet einen geschlossenen Ring in Umfangsrichtung, sodass das darin geführte Dichtteil 21 360° stufenlos verstellt werden kann. Die Führung und Lagerung des Dichtteils 21 innerhalb der Führungsnut 45 erfolgt mittels eines an einer in Richtung der Rotationsstellachse R orientierten Oberseite 47 sowie der gegenüberliegenden Unterseite 49 des Dichtteils 21 vorgesehenen Führungsvorsprung 51, 53. Es ist auch denkbar, dass das Dichtteil 21 nur einen einzigen Führungsvorsprung 51, 53 aufweist. Der Führungsvorsprung 51, 53 ragt in Richtung der Rotationsstellachse R in die Führungsnut 45 hinein und gleitet bei einer Rotationstellbewegung des Ventilglieds 5 in Radialrichtung entlang der Führungsnut 45. Dabei wirkt der Führungsvorsprung 51, 53 als Kulissenstein und kooperiert mit der Führungsnut 45 zum Lagern und Führen des Ventilglieds 5. Gemäß der vorliegenden Erfindung ist auf konstruktiv einfache Weise ein Wegeventil mit deutlich verminderter Reibung zwischen Ventilglied 5 und Ventilgehäuse 3 bereitgestellt, sodass der Verschleiß an den Komponenten deutlich reduziert ist und auf kostengünstigere Stellantriebe zurückgegriffen werden kann, wobei gleichzeitig eine ausreichende Dichtigkeit im Dichtkontakt-Schaltzustand gewährleistet ist. Die Vorteile werden unter anderem dadurch erreicht, dass ein insbesondere radialer Anpressdruck zum Abdichten der Fluidöffnungen 7, 9, 11 nur dann aufgebracht wird, wenn er notwendig ist, also wenn das Wegeventil 1 so geschaltet ist, dass eine Fluidöffnung 7, 9, 11 verschlossen werden soll.

In Figur 2 ist eine Draufsicht auf ein Ventilgehäuse 3 abgebildet, aus der die Kulissenführung 39 ersichtlich ist. Die den Kulissenpfad 43 definierende Führungsnut verläuft gemäß Figur 2 in Umfangsrichtung und konzentrisch bezüglich der Rotationsstellachse R und ist durch zwei in Radialrichtung zueinander beabstandete Nutwände 55, 57 begrenzt. Die radial innere Nutwand 55 ist Teil eines Umfangsstegs 56 oder -vorsprungs, welcher die Führungsnut 45 bildet bzw. begrenzt. Der Führungsvorsprung 53, 51 kann bezüglich eines insbesondere radialen Querschnitts der Führungsnut 45 formabgestimmt sein, sodass beim Stellen des Ventilglieds 5, wenn der Führungsvorsprung 51, 53 entlang des Kulissenpfads 43 entlang fährt, der Führungsvorsprung 53, 51 mit den Nutwänden 55, 57 sich in einem Gleitkontakt befinden kann. Die Führungsnut 45 ist so eingestellt, beziehungsweise das Dichtteil 21 und die Führungsnut 45 sind so aufeinander abgestimmt, dass beim Verstellen des Ventilglieds 5 im Bereich zwischen je zwei benachbarten Fluidöffnungen 7, 9, 10, 11 kein radialer Anpressdruck und damit ein radialer Reibungswiderstand zwischen Dichtteil 21 und Ventilgehäuse 3 besteht. Mit anderen Worten ist die Führungsnut 45 so dimensioniert, dass das Dichtteil 21 in Bezug auf einen Dichtkontakt-Schaltzustand, in dem das Dichtteil mit dem Ventilgehäuse 3 in einen fluiddichten Dichtkontakt geraten kann, nach radial innen zurückversetzt ist, sodass kein Reibungskontakt zwischen Dichtteil 21 und Ventilgehäuse 3 besteht. Somit besteht ein radialer Abstand zwischen Dichtteil 21 und Ventilgehäuseinnenwand 4.

Zur Sicherstellung eines ausreichenden Dichtkontakts zum fluiddichten Verschließen der Fluidöffnungen 7, 9, 10, 11 weist die Führungsnut in der beispielshaften Ausführung gemäß Figur 2 vier in Umfangsrichtung bezüglich der Rotationsstellachse R verteilte Weichen oder Andrücknasen 59 auf. Die Andrücknasen 59 sind an der radial inneren Nutwand 57 angeordnet und erstrecken sich nach radial außen in Bezug auf die Rotationsstellachse R. Je eine Andrücknase 59 ist außerdem je einer Fluidöffnung, 7, 9, 10, 11 zugeordnet und konzentrisch bezüglich einer Mittelachse durch die jeweilige Fluidöffnung 7, 9, 10, 11 orientiert, sodass zum Einnehmen des Dichtkontakt-Schaltzustand im Verlauf einer Rotationsstellbewegung des Ventilglieds 5 um die Rotationsstellachse R das Dichtteil 21 von den Andrücknasen 59 nach radial außen in Richtung des Ventilgehäuses 3 gedrängt wird, um einen radialen Anpressdruck zum fluiddichten Verschließen der jeweiligen Fluidöffnungen 7, 9, 10, 11 aufzubauen. Die Andrücknasen 59 bewirken demnach, dass das Dichtteil 21 quer, insbesondere radial, zur Rotationsstellachse um- beziehungsweise ausgelenkt wird. Die Relativbewegungsoption des Dichtteils 21 relativ zu dem Stellteil 19 wird, wie bereits beschrieben, mittels der Schienenführung 41 realisiert.

Erneut bezugnehmend auf Figur 1 ist zu erkennen, dass die Schienenführung 41 auf eine Vorsprung-Vertiefung-Struktur an Stellteil 19 und Dichtteil 21 realisiert ist, welche gemäß Figur 1 eine stellteilseitige, geradlinige Führungsschiene 61 aufweist, die gemäß Figur 1 durch ein paar sich parallel erstreckende Führungsschienenelementen gebildet ist, und einen dazu formkomplementären dichtteilseitigen Führungswagen 71 umfasst. Gemäß Figur 1 ist der Führungswagen 71 durch eine bezüglich der Führungsschiene 61 formangepasste Vertiefung an einer Innenseite eines dem Stellteil 19 zugewandten und zugeordneten Führungsteils 65 angeordnet, welches bezüglich eines stellteilseitigen, dem Dichtteil 21 zugewandten und zugeordneten Führungsteils 67 formangepasst und auf dieses aufgeschoben beziehungsweise aufgesteckt ist. Dadurch, dass die Andrücknasen 59 den Fluidöffnungen 7, 9, 10, 11 zugeordnet und zugewandt sind, wird das Stellteil 19 von den Andrücknasen 59 und mittels der Führungsschienen-Führungswagen-Struktur an Stellteil 19 und Dichtteil 21 zum Einnehmen des Dichtkontakt-Schaltzustands nach radial außen gedrängt, um einen radial Anpressdruck aufzubauen.

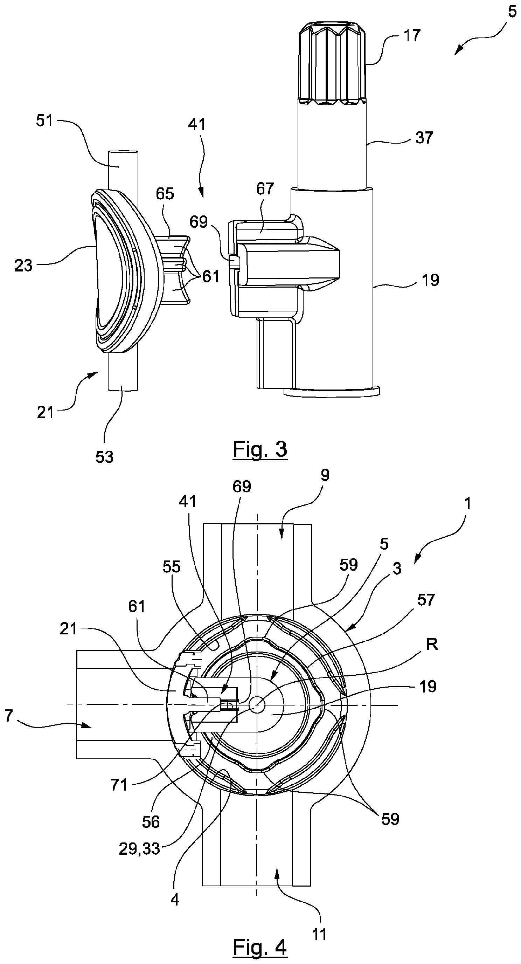

In Figur 3 ist eine weitere beispielhafte Ausführung eines zweiteiligen Ventilglieds für ein erfindungsgemäßes Wegeventil 1 abgebildet. Das Dichtteil 21 und das Stellteil 19 sind der Übersichtlichkeit halber in einem demontierten Zustand zueinander angeordnet. Der wesentliche Unterschied der Ausführung gemäß Figur 3 bezüglich der Ausführung gemäß Figur 1 besteht im Hinblick auf die Realisierung der Schienenführung 41. Während bei der Ausführung gemäß Figur 1 das Dichtteil 21 mittels des stellteilseitigen Führungsteils 65 auf ein zugehöriges Führungsteil 67 des Stellteils aufgeschoben beziehungsweise von außen aufgesetzt wird, ist das Führungsteil 65 gemäß Figur 3 so ausgestaltet, dass es in eine zugehörige Vertiefung 69 in das Kraftübertragungsteil des Stellteils 19 hineingeschoben wird.

Beispielsweise kann das Führungsteil 65 einen kreuzförmigen insbesondere asymmetrischen Querschnitt aufweisen. Gleiches gilt für die Vertiefung 69, sodass eine Fehlmontage verhindert ist. In Figur 3 bilden die Stege des kreuzförmigen Querschnitts die jeweiligen Führungsschienen 61 der Schienenführung 41. Die im Querschnitt kreuzförmige, formkomplementäre Vertiefung 69 weist zugehörige Führungswägen auf, die bei einer Relativbewegung von Dichtteil 21 und Stellteil 19 aneinander entlang gleiten. Es sei klar, dass es beispielsweise auch möglich ist, dass das Führungsteil 65 und das Führungsteils 67 von Dichtteil 21 beziehungsweise Stellteil 19 genau umgekehrt gestaltet sind, sodass das Führungsteil 67 des Stellteils 19 die kreuzförmigen Führungsschienen 61 umfasst, während das Führungsteil 65 die kreisförmigen Führungswägen aufweist, sodass wiederum das Führungsteil 67 des Stellteils 19 in das Führungsteil 65 des Dichtteils 19 eingeschoben beziehungsweise eingesetzt wird.

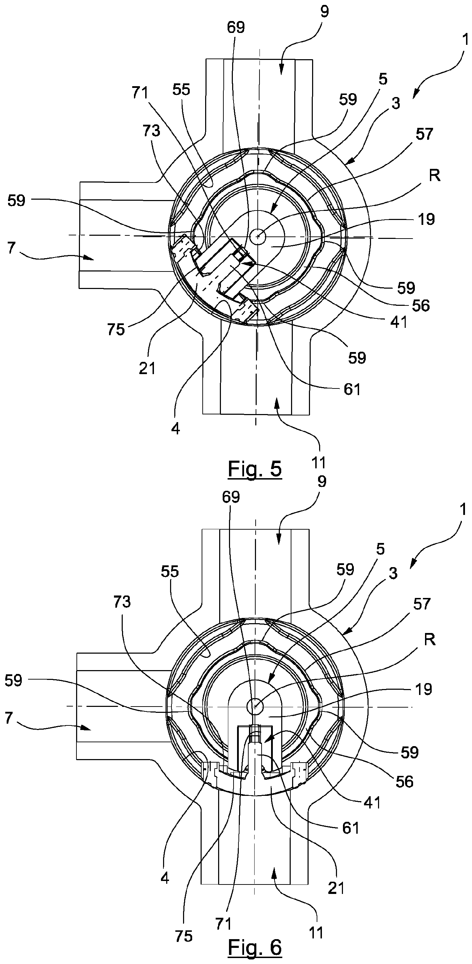

Die Figuren 4 bis 6 zeigen analog zur Figur 2 eine schematische Draufsicht auf ein Ventilgehäuse 3, das im Unterschied zu Ausführung gemäß Figur 2 nur drei Fluidanschlüsse 7, 9, 11 aufweist, und in welchem ein beispielsweise gemäß Figur 3 ausgebildetes Ventilglied 5 angeordnet ist. Die Figuren 4 bis 6 zeigen verschiedene Schaltzustände anhand der unterschiedlichen Rotationsstellungen des Ventilglieds 5 innerhalb des Ventilgehäuses 3. In den Figuren 4 bis 6 ist eine Rotationsstellbewegung des Ventilglieds 5 aus einem Dichtkontakt-Schaltzustand, in dem die Fluidöffnung 7 fluiddicht verschlossen ist (Figur 4), in einen Dichtkontakt-Schaltzustand bezüglich der Fluidöffnung 11 (Figur 6). Figur 5 zeigt einen Schwenkzustand, in dem sämtliche Fluidöffnungen 7, 9, 11 wenigstens teilweise freigegeben sind.

Aus einer Zusammenschau der Figuren 4 bis 6 geht das erfindungsgemäße Zusammenspiel aus Kulissenführung 39 und Schienenführung 42 hervor. In dem Dichtkontakt-Schaltzustand gemäß Figur 4 ist das Dichtteil 21 in Bezug auf das Stellteil 19 durch die Kulissenführung 39 und mittels der Schienenführung 41 nach radial außen in einen Dichtkontakt mit der Ventilgehäuseinnenwandung 4 gedrängt, um einen radialen Anpressdruck bezüglich der Ventilgehäuseinnenwandung 4 aufzubauen, damit die Fluidöffnung 7 möglichst fluiddicht verschlossen ist. Wie bereits erwähnt erfolgt das radial nach außen Drängen des Dichtteils 21 gegenüber dem Stellteil 19 durch die Kooperation aus Kulissenführung 39 und Schienenführung 41. Der innerhalb der Führungsnut 45 geführte und darin aufgenommene Führungsvorsprung 53 des Dichtteils 21 ist formschlüssig mittels der Andrücknase 59, welche der Fluidöffnung 7 zugeordnet ist, nach radial außen umgelenkt, wodurch über die Schienenführung 41 die entsprechenden Führungsschienen und Führungswägen an Dichtteil und Schließteil aneinander entlang gleiten, um das gesamte Dichtteil 21 nach radial außen zu bewegen. Der vergrößerte Radialabstand zwischen Dichtteil 21 und der Rotationsstellachse R ist beispielsweise durch den radialen Abstand des dichteilseitigen Führungsschiene 61 gegenüber dem Stellteil 19 innerhalb der Vertiefung 69, welche den Führungswagen 71 bildet im Vergleich zur Ausführung gemäß Figur 5 zu erkennen, bei der das Ventilglied im Schwenkbereich zwischen zwei Dichtkontakt-Schließzuständen abgebildet ist.

In Figur 5 ist zu erkennen, dass das Dichtteil 21 nach radial innen zurückversetzt ist. Dies ist zum einen daraus ersichtlich, dass ein radialer Abstand zwischen Ventilgehäuseinnenwandung 4 und Dicht-/Kontaktfläche 23 besteht und ferner dadurch, dass radial innenseitig eine der Dicht-/Kontaktfläche 23 gegenüberliegende Innenseite 73 des Dichtteils 21 sich deutlich einer Anschlagfläche 75 des Stellteils 19 angenähert hat, welche durch eine die Vertiefung 69 begrenzende Stirnwand gebildet ist. Des Weiteren ist innerhalb der Vertiefung 69 zu erkennen, dass die Führungsschiene 61 nach radial innen zurück versetzt ist. Dies hängt damit zusammen, dass der in der Führungsnut 45 geführte Führungsvorsprung 53 weiterhin den den Kulissenpfad 43 definierenden Führungsnutwänden 55, 57 der Führungsnut 45 folgt, die in einem Schwenkbereich zwischen zwei benachbarten Fluidöffnungen 7, 9, 11 gegenüber den Andrücknasen 59 nach radial innen zurück versetzt sind, sodass auch der Führungsvorsprung 53 und in Folge dessen das gesamte Dichtteil 21 nach radial innen zurück versetzt wird.

Es ist beispielsweise auch denkbar, dass das radiale Zurückversetzen des Dichtteils 21 insbesondere ausschließlich unter dem Einfluss des wirkenden Fluiddrucks beim Öffnen einer Fluidöffnung 7, 9, 10, 11 erfolgt. Der Schaltzustand gemäß Figur 6 ist analog zum Dichtkontakt-Schaltzustand gemäß Figur 4 zu verstehen, wobei in Figur 6 eine andere Fluidöffnung, nämlich die Fluidöffnung 11, fluiddicht verschlossen ist. Die Funktionsweise zum Ausbilden des Dichtkontakt-Schaltzustands erfolgt in analoger Weise. In sämtlichen Ventilzuständen gemäß den Figuren 4 bis 6 ist zu erkennen, dass das Ventilglied 5 keinen Fluiddurchgang aufweist, durch den die Fluidströmung in einem Öffnungs- beziehungsweise Freigabezustand des Ventilglieds hindurch strömt. Die Fluidströmung innerhalb des Ventilgehäuses 5 strömt vollständig an dem Ventilglied 5 vorbei beziehungsweise umströmt dieses.

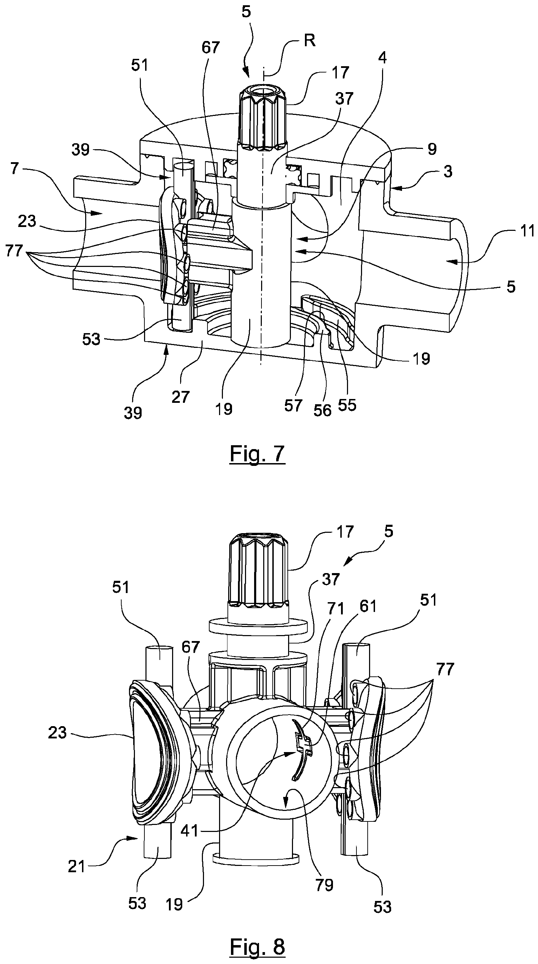

In Figur 7 ist eine schematische Darstellung in ähnlicher Perspektive wie in Figur 1 einer weiteren beispielshaften Ausführung eines erfindungsgemäßen Wegeventils 1 gezeigt. Die Ausführung gemäß Figur 7 unterscheidet sich von der Ausführung gemäß Figur 1 im Wesentlichen durch die Ausgestaltung der Schienenführung 41, die gemäß Figur 7 entsprechend der Ausführung des Ventilglieds 5 aus Figur 3 realisiert ist. Ferner ist in Figur 7 zu erkennen, dass die Kulissenführung 39 entsprechend der Ausführungen in den Figuren 2 und 4 bis 6 realisiert ist.

Die Kulissenführung gemäß Figur 1 ist so zu verstehen, dass das Dichtteil 21 beim Verlassen des Dichtkontakt-Schaltzustands (Figur 4; Figur 6) im Wesentlichen ausschließlich unter dem Einfluss des Fluiddrucks der einströmenden Fluidströmung nach radial innen zurück versetzt wird, um den Reibkontakt zwischen Dichtteil 21 und Ventilgehäuseinnenwandung 4 zu reduzieren, insbesondere zu unterbinden. In Figur 7 erfolgt das Führen des Dichtteils 21 aus dem Dichtkontakt-Schaltzustand in den radial zurück versetzten Freigabe-Schaltzustand unterstützt durch die entsprechend geformte radial außenseitige Führungsnutwand 55 (siehe insbesondere Figur 2). Insofern wird hier das Dichtteil 21 auch aus dem Dichtkontakt-Schaltzustand heraus in Richtung des Freigabe-Schaltzustands gedrängt.

In Figur 7 ist außerdem zu erkennen, dass das Dichtteil 21 in Bezug auf die Aufnahme eines Dichtungselements anders als das Dichtteil 21 gemäß Figur 1 gestaltet ist. Das Dichtteil 21 weist Durchgangsöffnungen 77 auf, die im Wesentlichen in Radialrichtung in Bezug auf die Rotationsstellachse R orientiert sind und über die von der radial äußeren Dicht-/Kontaktfläche 23 her ein Dichtungsbauteil montiert werden kann. Die Dichtung kann beispielsweise eingespritzt oder eingesetzt werden, wobei die Durchgangsbohrungen 77 dazu dienen, dass insbesondere beim Einspritzen beispielsweise einer Elastomerdichtung Elastomermaterial in die Durchgangsöffnungen 77 eingespritzt wird und darin einknüpft. Die Durchgangsöffnungen 77 können in Bezug auf die Einspritz- beziehungsweise Einsetzrichtung auch eine Hinterschneidung zur form- und/oder kraftschlüssigen Kopplung von Dichtteil 21 und Dichtungselement aufweisen.

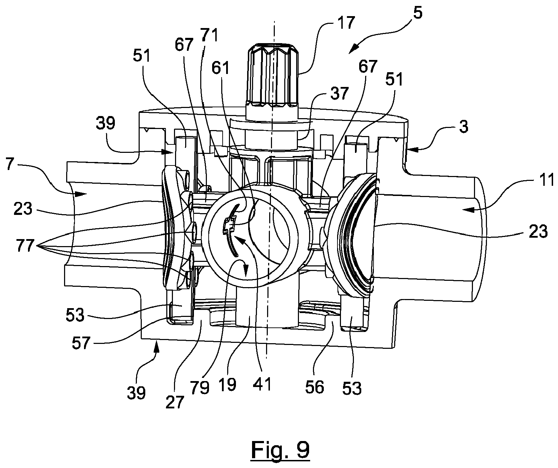

In den Figuren 8 und 9 ist eine weitere beispielhafte Ausführung eines Ventilglieds 5 gezeigt, welches gemäß Figur 9 in einem weiteren beispielhaften Wegeventil 1 der vorliegenden Erfindung eingesetzt wird und innerhalb eines Ventil- oder Fluidgehäuses 3 aufgenommen ist. Im Unterschied zu den vorhergehenden Ausführungen weist das Ventilglied 5 zwei in Radialrichtung bezüglich der Rotationsstellachse R gegenüberliegende, insbesondere identisch geformte, Dichtteile 21 auf, welche über eine entsprechende Schienenführung 39 miteinander gekoppelt sind, um jeweils eine Relativbewegungsmöglichkeit der beiden Dichtteile 21 gegenüber dem einzelnen, mittigen Stellteil 19 zu realisieren. Das Ventilglied 5 gemäß den Figuren 8 und 9 ist insbesondere für ein 4/2-Wegenventil geeignet, wobei mittels des Ventilglieds 5 gleichzeitig zwei gegenüberliegende Fluidöffnungen 7, 9, 10, 11 verschließbar sind. Durch das derart gestaltete Ventilglied 5 werden jeweils zwei gegenüberliegende Fluidöffnungen 7, 9, 10, 11 verschlossen und die zwei weiteren gegenüberliegenden Fluidöffnungen 7, 9 ,11 ,10 frei gegeben. Mit anderen Worten erfolgt die zugelassene Fluidströmung durch das Ventilgehäuse 3 geradlinig über zwei insbesondere fluchtend zueinander gegenüberliegende Fluidöffnungen 7, 9, 10, 11.

Zur insbesondere strömungsverlustfreien Führung der Fluidströmung durch das Ventilgehäuse 3 und vor allem durch das Ventilglied 5 umfasst das Ventilglied 5 gemäß der Figuren 8 und 9 einen zentralen Fluiddurchgang 79, der die beiden freizugebenden Fluidöffnungen 7, 9, 10, 11 fluidal miteinander verbindet. Ein Öffnungsquerschnitt des Fluiddurchgangs 79 kann bezüglich eines Öffnungsquerschnitts der Fluidöffnungen 7, 9, 10, 11 des Fluidgehäuses 3 formangepasst sein. Der Fluiddurchgang 79 ist quer, insbesondere senkrecht, zum einen bezüglich der Rotationsstellachse R und zum anderen bezüglich der Relativbewegungsrichtung der beiden Stellteile 21 bezüglich des Stellteils 19 orientiert. In Figur 9 ist zu erkennen, dass beim Verschwenken beziehungsweise Stellen des Ventilglieds 5 jeweils ein Führungsvorsprung 53 der beiden Dichtteile 21 innerhalb der des Kulissenpfads 43 definierenden Führungsnut 45 im Ventilgehäuse 3 aufgenommen sind und beim Stellen des Ventilglieds 5 innerhalb der Führungsnut 45 entlang gleiten. Durch die auch in dieser Ausführung vorliegende aufeinander Abstimmung von Kulissenführung 39 und Schienenführung 41 werden die beiden Dichtteile 21 gleichzeitig durch jeweils eine Andrücknase 59, die jeweils eine der beiden gegenüberliegenden, zu verschließenden Fluidöffnungen 7, 9, 10, 11 zugeordnet sind, nach radial außen in den Dichtkontakt-Schaltzustand mit der jeweiligen Fluidöffnung 7, 9, 10, 11 gedrängt. Das Verlassen des Dichtkontakt-Schaltzustands erfolgt ebenfalls bei beiden Dichtteilen 21 analog und gleichzeitig.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### BEZUGSZEICHENLISTE

- 1: Wegeventil
- 3: Ventilgehäuse
- 4: Ventilgehäuseinnenwandung
- 5: Ventilglied
- 7, 9, 10, 11: Fluidöffnung
- 13: Deckel
- 15: Durchgangsöffnung
- 17: Kraftübertragungsteil
- 19: Stellteil
- 21: Dichtteil
- 23: Dichtfläche
- 25: Dichtung
- 27: Ventilgehäuseboden
- 29: Lagerung
- 31: Ringwand
- 33: Vertiefung
- 35: Lagerungsvorsprung
- 37: Welle
- 39: Kulissenführung
- 41: Schienenführung
- 43: Kulissenpfad
- 45: Führungsnut
- 47: Oberseite
- 49: Unterseite
- 51, 53: Führungsvorsprung
- 55,57: Nutwand
- 56: Umfangssteg
- 59: Andrücknase
- 61: Führungsschiene
- 63: Führungsschienenelement
- 65: Führungsteil des Dichtteils
- 67: Führungsteil des Stellteils
- 69: Vertiefung
- 71: Führungswagen
- 73: Innenseite
- 75: Anschlagkontaktfläche
- 77: Durchgangsöffnung
- 79: Fluiddurchgang

## Patentansprüche

1. Wegeventil (1) zum Einstellen einer Fluidströmung, wie einer Kühlmittelströmung, zwischen wenigstens zwei Schaltzuständen, umfassend:
- ein Ventilgehäuse (3);
- ein stellbares Ventilglied (5); und
- eine Kulissenführung (39), die dazu eingerichtet ist, das Ventilglied (5) in einen Dichtkontakt-Schaltzustand mit dem Ventilgehäuse (3) zu drängen und in einen bezüglich des Dichtkontakt-Schaltzustands zurückversetzten Freigabe-Schaltzustand zu führen.

2. Wegeventil (1) nach Anspruch 1, wobei die Kulissenführung (39) einen in dem Ventilgehäuse, insbesondere einem Ventilgehäuseboden, ausgebildeten, insbesondere aus einem Stück mit dem Ventilgehäuse (3) hergestellten, Kulissenpfad (43) aufweist, in dem das Ventilglied (5) geführt ist.

3. Wegeventil (1) nach Anspruch 2, wobei der Kulissenpfad (43) derart verläuft, dass beim Einnehmen des Dichtkontakt-Schaltzustands das Ventilglied (5) quer, insbesondere radial, zu seiner Stellachse, insbesondere Rotationsstellachse, in Richtung einer Dichtkontaktfläche des Ventilgehäuses umgelenkt wird.

4. Wegeventil (1) nach Anspruch 3, wobei die Kulissenführung (39) eine, insbesondere zwei, drei oder vier in einem Abstand zueinander angeordnete, Andrücknase aufweist, die sich in den Kulissenpfad (43) erstreckt, sodass beim Überfahren der Andrücknase durch das Ventilglied (5) dieses von der Andrücknase in den Dichtkontakt-Schaltzustand gedrängt wird.

5. Wegeventil (1) nach Anspruch 2, 3 oder 4, wobei der Kulissenpfad (43) durch eine in das Ventilgehäuse (3) eingebrachte Führungsnut (45) gebildet ist und wobei das Ventilglied (5) einen als Kulissenstein fungierenden, mit der Führungsnut (45) zusammenwirkenden Führungsvorsprung (51, 53) aufweist.

6. Wegeventil (1) nach Anspruch 5, wobei die Führungsnut (45) in Bezug auf die Rotationsstellachse (R) des als Drehkolben ausgebildeten Ventilglieds im Wesentlichen ringförmig ausgebildet ist und eine, insbesondere zwei, drei oder vier in Umfangsrichtung verteilte, Weiche aufweist, die das Ventilglied (5) zum Einnehmen des Dichtkontakt-Schaltzustands aus dem ringförmigen Kulissenpfad (43) umlenkt.

7. Wegeventil (1), insbesondere nach einem der vorstehenden Ansprüche, zum Einstellen einer Fluidströmung, wie einer Kühlmittelströmung, zwischen wenigstens zwei Schaltzuständen, umfassend:
- ein Ventilgehäuse (3); und
- ein Ventilglied (5) mit einem mit einem Stellantrieb insbesondere kraftübertragungsgemäß zu verbindenden Stellteil (19) und einem Dichtteil (21) zum Einnehmen eines Dichtkontakts mit dem Ventilgehäuse, wobei das Dichtteil (21) mittels einer Schienenführung (41) beweglich relativ zu dem Stellteil (19) gelagert ist.

8. Wegeventil (1) nach Anspruch 7, wobei die Schienenführung (41) durch eine formkorrespondiere Vorsprung-Vertiefung-Struktur an Stellteil (19) und Dichtteil (21) realisiert ist.

9. Wegeventil (1) nach Anspruch 7 oder 8, wobei das Ventilglied (5) einen Dichtkontakt-Schaltzustand, in dem sich das Dichtteil (21) im Dichtkontakt mit dem Ventilgehäuse (3) befindet, und einen bezüglich des Dichtkontakt-Schaltzustands zurückversetzten Freigabe-Schaltzustand einnehmen kann, in dem das Dichtteil (21) von dem Ventilgehäuse (3) weg bewegt ist.

10. Wegeventil (1) nach einem der Ansprüche 7 bis 9, wobei das Dichtteil (21) derart beweglich an dem Stellteil (19) gelagert ist, dass das Dichtteil (21) beim Verlassen des Dichtkontakts vorzugsweise ausschließlich unter dem Einfluss des Fluiddrucks von dem Ventilgehäuse (3) weg bewegt wird.

11. Wegeventil (1) nach einem der Ansprüche 7 bis 10, wobei die Bewegungsachse des Dichtteils im Wesentlichen senkrecht zur Stellachse, insbesondere Rotationsstellachse, des Ventilglieds orientiert ist.

12. Wegeventil (1) nach einem der Ansprüche 8 bis 11, wobei die Vorsprung-Vertiefung-Struktur eine dichtteil- oder stellteilseitige geradlinige Führungsschiene (61) und einen dazu formkomplementären stellteil- oder dichtteilseitigen Führungswagen (71) aufweist.

13. Wegeventil (1) nach Anspruch 12, wobei die Führungsschiene (61) einen asymmetrischen, insbesondere im Wesentlichen kreuzförmigen, Querschnitt aufweist.

14. Wegeventil (1) nach einem der Ansprüche 7 bis 13, wobei die Kulissenführung (39) und die Schienenführung (41) miteinander gekoppelt, insbesondere aufeinander abgestimmt, sind.

15. Wegeventil (1) nach Anspruch 14, wobei die Kulissenführung (39) dazu eingerichtet ist, zum Einnehmen des Dichtkontakt-Schaltzustands das Dichtteil (21) relativ zu dem Stellteil (19) zu verlagern und in einen Dichtkontakt mit dem Ventilgehäuse (3) zu drängen.

16. Wegeventil (1) nach Anspruch 14 oder 15, wobei das Dichtteil (21) beim Stellen des Ventilglieds eine Exzenterbewegung entlang des Kulissenpfads ausführt, insbesondere derart, dass das Dichtteil (21) insbesondere von einer Weiche oder einer Andrücknase in den Dichtkontakt-Schaltzustand gedrängt und vorzugsweise ausschließlich unter dem Einfluss des Fluiddrucks aus dem Dichtkontakt zurückversetzt wird.

17. KFZ-Wegeventil (1), insbesondere KFZ-Thermomanagementventil, wie KFZ-Kühlmittelregelventil, insbesondere nach einem der vorstehenden Ansprüche, zum Einstellen einer Fluidströmung, wie einer Kühlmittelströmung, umfassend:
- ein Ventilgehäuse (3) mit wenigstens zwei Fluidöffnungen (7, 9, 10, 11); und
- ein Ventilglied (5), das zwischen einem Schließzustand, in dem das Ventilglied (5) in einen Dichtkontakt mit dem Ventilgehäuse (3) gedrängt ist, um eine der Fluidöffnungen (7, 9, 10, 11) fluiddicht zu verschließen, und einem Öffnungszustand, in dem das Ventilglied (5) von dem Ventilgehäuse (3) weg zurückversetzt ist, um die Fluidöffnung (7, 9, 10, 11) wenigstens teilweise zu öffnen, stellbar ist.

18. Wegeventil (1) nach einem der vorstehenden Ansprüche, wobei das Ventilglied (5) frei von einem Fluiddurchgang ausgestaltet ist.

19. KFZ-Fluidströmungsleitsystem, insbesondere KFZ-Thermomanagement-Fluidleitsystem, wie KFZ-Kühlkreislauf, umfassend ein nach einem der vorstehenden Ansprüche ausgebildetes Wegeventil (1).
